# EUROPÄISCHE PATENTSCHRIFT

(11) **EP 2 205 888 B1**
(45) Veröffentlichungstag und Bekanntmachung des Hinweises auf die Patenterteilung: **30.11.2016**
(21) Anmeldenummer: 08801350.3
(22) Anmeldetag: 29.09.2008
(51) Int. Cl.: F16D 69/02

(54) **REIBBELAG**
FRICTION LINING
GARNITURE DE FROTTEMENT

(30) Priorität: 16.10.2007 DE 102007049739
(43) Veröffentlichungstag der Anmeldung: 14.07.2010
(73) Patentinhaber: Schaeffler Technologies AG & Co. KG, 91074 Herzogenaurach (DE)
(72) Erfinder: RÜHRUP, Vera, 57537 Forst-Seifen (DE); RUNGE, Oliver, 51570 Alt-Windeck (DE); SPANDERN, Christian, 57578 Elkenroth (DE)
(86) Internationale Anmeldenummer: PCT/DE2008/001613
(87) Internationale Veröffentlichungsnummer: WO 2009/049584

(56) Entgegenhaltungen:
- EP-A- 0 513 769
- CA-A- 987 423
- DE-A1- 2 925 265
- DE-A1- 19 712 203
- DE-B4- 4 431 642
- JP-A- 59 081 340
- JP-A- 63 195 438
- JP-A- 63 293 336
- US-A- 3 030 215
- DATABASE WPI Week 198941 Thomson Scientific, London, GB; AN 1989-295431 XP002509310 -& JP 01 216135 A (TOYOTA JIDOSHA KK) 30. August 1989 (1989-08-30)

## Beschreibung

Die Erfindung betrifft einen Reibbelag, insbesondere einen Kupplungsbelag, nach dem Oberbegriff des Anspruchs 1.

Derartige Kupplungsbeläge werden insbesondere für Reibungskupplungen in Fahrzeugen eingesetzt. Hierbei wurden sie mit einer metallischen Trägerplatte fest verbunden bzw. auf eine Kupplungsscheibe aufgenietet, um in Verbindung mit einem Gegenlaufpartner in gekuppeltem Zustand eine Drehmomentübertragung zwischen einem Motor und einem Getriebe zu ermöglichen, bzw. bei geöffneter Kupplung auszukuppeln.

Durch die DE 44 31 642 B4 wird ein Reibbelag offenbart, welcher unter anderem Fasern, Binder, Füller sowie Mikrohohlkugeln als Bestandteile aufweist. Derartige Mikrohohlkugeln fallen als Verbrennungsrückstände bei Prozessen in Kohlekraftwerken an. Aufgrund von Lufteinschluss entstehen dabei hohlkugelförmige Gebilde.

Die deutsche Offenlegungsschrift DE 29 25 265 A1 offenbart Kupplungsreibbeläge, die handelsübliche Mikrohohlkugeln enthalten. Bezüglich der Mikrohohlkugeln wird auf das US Patent 3,030,215 verwiesen, welches Glashohlkugeln aus Bohrsilikatglas beschreibt.

In Druckschrift DE 197 12 203 A1 wird ein Reibbelag sowie der dazugehörige Herstellungsprozess offenbart, in welchem Trägerelemente eingebettet sind.

Es hat sich herausgestellt, dass Reibbeläge nach dem Stand der Technik, insbesondere bei Wechselwirkung mit einer Anpress- oder Druckplatte einen nennenswerten Verschleiß an den Gegenlaufpartnern verursachen.

Es ist daher die Aufgabe der Erfindung, einen Reibbelag vorzuschlagen, der den Verschleißaspekt am Gegenlaufpartner verbessert.

Diese Aufgabe wird durch einen Reibbelag mit den Merkmalen des Anspruchs 1 gelöst.

Wie sich gezeigt hat, führt ein Einsatz der erfindungsgemäßen Glashohlkugeln aus Borsilikatglas in einem Reibbelag zu einer deutlichen Verringerung des Verschleißes des Gegenlaufpartners.

Der Gewichtsanteil der Glashohlkugeln am Gewicht des Reibbelags beträgt 2 bis 15 %.

Der Durchmesser der Glashohlkugeln beträgt weniger als 300 Mikrometer.

Die Glashohlkugeln weisen eine Wandstärke zwischen 5 und 50 % besonders bevorzugt 10 % des Kugelradius auf, um eine gewünschte Dichte der Glashohlkugeln zu erzielen.

Die Glashohlkugeln weisen eine isostatische Druckstabilität von mehr als 10 Megapascal auf.

Die Glashohlkugeln weisen eine Mohs Härte von weniger als 5, bevorzugt 3 bis 4 auf.

Die Glashohlkugeln weisen eine Dichte von 0,6 bis 0,8 g/cm³, bevorzugt 0,7 g/cm³ auf, um dem Reibbelag eine gewünschte Dichte zu geben.

In einer weiteren vorteilhaften Ausführungsform weisen die Glashohlkugeln einen Schmelzpunkt zwischen 500°C bis 700°C, bevorzugt 600°C auf.

Die Glashohlkugeln bestehen aus 50 Gew.-% oder mehr SiO₂, weniger als 20 Gew.-% Al₂O₃, jeweils weniger als 5 Gew.-% Fe₂O₃, TiO₂, K₂O und CaO, 2 bis 20 Gew.-% B₂O₃ sowie 20 bis 40 Gew.-% Na₂O, bevorzugt aus 60 bis 70 Gew.-% SiO₂, weniger als 5 Gew.-% Al₂O₃, jeweils weniger als 1 Gew.-% Fe₂O₃, TiO₂, K₂O und CaO, 2 bis 10 Gew.-% B₂O₃ sowie 20 bis 35 Gew.-% Na₂O.

In einer weiteren bevorzugten Ausführungsform ist vorgesehen, dass in den Reibbelag mindestens ein Reibbelagträgermittel eingebettet ist. Die Gewichtsprozentangaben in der vorliegenden Patentanmeldung beziehen sich jedoch immer auf den Reibbelag ohne Reibbelagträgermittel.

Ebenfalls vorteilhaft ist eine Ausführungsform, wonach der Reibbelag mit mindestens einem Reibbelagträgermittel fest verbunden ist.

Eine Ausführungsform ergibt sich ebenfalls als bevorzugt, wenn der Reibbelag aus 10 bis 40 Gewichtsprozent Harz, 5 bis 20 Gewichtsprozent Kautschuk, 0,5 bis 3 Gewichtsprozent Vulkanisationszusätzen, 8 bis 20 Gewichtsprozent Glas, 10 bis 30 Gewichtsprozent Schwerspat, 5 bis 15 Gewichtsprozent Ruß, 0 bis 10 Gewichtsprozent Koks, 0 bis 5 Gewichtsprozent Graphit und 5 bis 15 Gewichtsprozent Metall besteht, wobei das Glas aus Glasfasern und/oder Glasmehl und 2 bis 10 Gewichtsprozent Glashohlkugeln besteht.

Weitere Vorteile und vorteilhafte Ausgestaltung der Erfindung sind Gegenstand der nachfolgenden Beschreibung.

Der erfindungsgemäße Reibbelag lässt sich auf einfache Weise herstellen, denn die aus dem Stand der Technik bekannten Herstellungsverfahren können grundsätzlich beibehalten werden. Es ist allerdings erforderlich, der Mischung erfindungsgemäß Glashohlkugeln aus Borsilikatglas zuzusetzen. Beispielsweise kann die Mischung enthalten: 10 bis 40 Gewichtsprozent Harz, bestehend aus Phenol- und Melaminharz, 5 bis 20 Gewichtsprozent NBR-Kautschuk, 0,5 bis 3 Gewichtsprozent Vulkanisationszusätze, 8 bis 20 Gewichtsprozent Glas bestehend aus Glasfasern und/oder Glasmehl und den erfindungsgemäßen Glashohlkugeln, 10 bis 30 Gewichtsprozent Schwerspat, 5 bis 15 Gewichtsprozent Ruß, wobei Rußsorten mit unterschiedlich großer Oberfläche verwendet werden können, 0 bis 10 Gewichtsprozent Koks, 0 bis 5 Gewichtsprozent Graphit sowie 5 bis 15 % Metall, insbesondere Kupfer oder Messing. Bevorzugt liegen die erfindungsgemäßen Glashohlkugeln aus Borsilikatglas darin zu 2 bis 15 Gewichtsprozent vor.

Die Durchmischung kann mittels eines Mischers erfolgen, sodass die Inhaltsstoffe anschließend homogen verteilt vorliegen. Eine bestimmte Reihenfolge bei der Zugabe der Bestandteile ist beim Mischen nicht zu beachten. Auch können alle Materialien können gleichzeitig in den Mischer gegeben werden.

Die erfindungsgemäßen Glashohlkugeln aus Borsilikatglas bestehen bevorzugt aus 60 bis 70 Gew.-% SiO₂, weniger als 5 Gew.-% Al₂O₃, jeweils weniger als 1 Gew.-% Fe₂O₃, TiO₂, K₂O und CaO, 2 bis 10 Gew.-% B₂O₃ sowie 20 bis 35 Gew.-% Na₂O.

Die erfindungsgemäßen Glashohlkugeln aus Borsilikatglas weisen einen Außendurchmesser von weniger als 300 Mikrometern auf. Sie können dabei alle im Wesentlichen in derselben Größe vorliegen, aber auch einer Korngrößenverteilung unterliegen. Der Innendurchmesser der Glashohlkugel ist dabei so gewählt, dass die Glashohlkugeln eine Wandstärke zwischen 5 und 50 % des Kugelradius aufweisen. Besonders bevorzugt ist dabei eine Wandstärke von ca. 10 %. Die Glashohlkugeln weisen dabei eine isostatische Druckstabilität von mehr als 10 Megapascal auf. Die isostatische Druckstabilität der Glashohlkugeln wird dabei in einer Flüssigkeit bestimmt. Die Glashohlkugeln weisen eine Mohs Härte von bevorzugt 3 bis 4, eine Dichte von bevorzugt 0,7 g/cm³ und einen Schmelzpunkt von bevorzugt 600°C auf.

Anders als bei Mikrohohlkugeln aus Verbrennungsrückständen, deren Kugelwände oft trüb, milchig, blasig und porös waren, ergeben sich die Kugelwände der Glashohlkugeln aus Borsilikatglas als klar und nicht porös. Durch den gezielten Herstellungsprozess der Glashohlkugeln aus Borsilikatglas ergibt sich zudem eine insgesamt gleich bleibende Produktquälität.

In einer bevorzugten Ausführungsform ist vorgesehen, in den Reibbelag ein Reibbelagträgermittel - im Rahmen dieser Anmeldung auch Belagträger oder Reibbelagträger genannt - einzubetten. Dies kann beispielsweise dadurch realisiert werden, dass in einer Heißpresse das Gemisch des Reibmaterials eindosiert wird, anschließend ein Belagträger in der Presse platziert wird und anschließend weiteres Material zudosiert wird, bevor das Material samt dem Belagträger - beispielsweise durch Heißpressen - in seinen Endzustand geformt wird.

Ebenso kann es vorteilhaft sein, wenn erst der mit einer Abstandshaltevorrichtung versehene Belagträger in die Form eingelegt wird, anschließend das Reibmaterial zudosiert wird und das Material beim Pressvorgang - wie beispielsweise einem Heißpressvorgang - durch Löcher im Belagträger in den Bereich unter den Belagträger fließt.

Darüber hinaus kann der Reibbelag derart aufgebaut sein, dass die Reibbelagschicht vor dem Belagträger (Vorderseite) eine andere, unterschiedliche Materialmischung aufweist als die Reibbelagschicht hinter dem Belagträger (Rückseite). Die Reibbelagschicht vor dem Belagträger (Vorderseite) weist die eigentliche Reibfläche auf und die Reibbelagschicht hinter dem Belagträger dient vorzugsweise nicht als Reibfläche. Dadurch kann für die Belagmischung hinter dem Belagträger (Rückseite) eine Materialmischung eingesetzt werden, die nicht den hohen Anforderungen bezüglich des Reibwerts genügen muss. Dieses Material kann auch vorzugsweise eine geringere Dichte aufweisen, damit das Gewicht und das Trägheitsmoment des Reibbelags reduziert werden. Zu speziellen Zwecken kann auch eine höhere Dichte auf der Rückseite gefordert sein. Dies kann beispielsweise durch unterschiedliche Zugabe der erfindungsgemäßen Glashohlkugeln realisiert werden. Ebenso kann die Rückseite auch mit einem höheren Anteil der kostengünstigeren Bestandteile hergestellt werden.

In Abhängigkeit der Materialwahl und des Verwendungszweckes kann die Rückseite des Reibbelags auch dünner oder dicker als die Vorderseite gewählt werden.

Darüber hinaus kann es vorteilhaft sein, die Belagträger einer Oberflächenbehandlung zur besseren Haftung des Belagmaterials zuzuführen. In diesem Zusammenhang sei auf die DE 197 12 203 A1 der Anmelderin verwiesen.

In einer weiteren bevorzugten Ausführungsform wird der Reibbelag mit einem Reibbelagträger fest verbunden. Dies kann bereits bei der Herstellung eines Vorpresslings und/oder beim Heißpressvorgang geschehen. Beim Heißpressvorgang wird dabei der Belagträger mit dem Reibbelag verbacken. Zweckmäßig ist es, wenn zumindest die mit dem Belag verbundene Seite des Belagträgers vorbehandelt, beispielsweise geätzt und/oder sandgestrahlt ist.

Weiterhin kann es zweckmäßig sein, wenn der Reibbelagträger mit einem Kleber beschichtet ist. In diesem Zusammenhang sei auf die DE 44 31 642 B4 der Anmelderin verwiesen.

In eine bevorzugten Ausführungsform wird der erfinddungsgemäße Reibbelag wie folgt hergestellt: Nachdem die Reibbelagbestandteile in einem Mischer homogen vermischt wurden, wird eine vorgegebene Menge dieses Gemisches in ein Vorformwerkzeug gefüllt, darin gleichmäßig verteilt und danach zu einem Vorpressling vorverdichtet. Der Vorpressling wird in einer Heißpressform aufgenommen und in einem Heißpressvorgang auf die Sollform gepresst, wobei eine weitere Verdichtung des Vorpresslings stattfindet. Anschließend kann der Reibbelag nachbehandelt, beispielsweise gehärtet, geschliffen und gebohrt werden.

## Patentansprüche

1. Reibbelag, insbesondere Kupplungsreibbelag, bestehend aus mindestens einer Schicht, in dem zumindest Glashohlkugeln enthalten sind **dadurch gekennzeichnet, dass** die Glashohlkugeln aus Borsilikatglas bestehen, wobei die Glashohlkugeln aus 50 Gew.-% oder mehr SiO₂, weniger als 20 Gew.-% Al₂O₃, jeweils weniger als 5 Gew.-% Fe₂O₃, TiO₂, K₂O und CaO, 2 bis 20 Gew.-% B₂O₃ sowie 20 bis 40 Gew.-% Na₂O, bevorzugt aus 60 bis 70 Gew.-% SiO₂, weniger als 5 Gew.-% Al₂O₃, jeweils weniger als 1 Gew.-% Fe₂O₃, TiO₂, K₂O und CaO, 2 bis 10 Gew.-% B₂O₃ sowie 20 bis 35 Gew.-% Na₂O bestehen, wobei die Glashohlkugeln eine Mohs Härte von weniger als 5, bevorzugt 3 bis 4 aufweisen, und wobei die Glashohlkugeln eine Dichte von 0,6 bis 0,8 g/cm³, bevorzugt 0,7 g/cm³ aufweisen, wobei
die Glashohlkugeln einen Gewichtsanteil von 2 bis 15 Prozent des Gewichts des Reibbelags ausmachen, wobei
die Glashohikugeln einen Durchmesser von weniger als 300 Mikrometern aufweisen, wobei
die Glashohlkugeln eine Wandstärke zwischen 5 und 50 Prozent, bevorzugt 10 Prozent des Kugelradius aufweisen, und wobei
die Glashohlkugeln eine isostatische Druckstabilität von mehr als 10 Megapascal aufweisen.

2. Reibbelag nach Anspruch 1 **dadurch gekennzeichnet, dass** die Glashohlkugeln einen Schmelzpunkt zwischen 500°C bis 700°C, bevorzugt 600°C aufweisen.

3. Reibbelag nach Anspruch 1 **dadurch gekennzeichnet, dass** in den Reibbelag mindestens ein Reibbelagträgermittel eingebettet ist.

4. Reibbelag nach Anspruch 1 **dadurch gekennzeichnet, dass** der Reibbelag mit mindestens einem Reibbelagträgermittel fest verbunden ist.

5. Reibbelag nach Anspruch 1 **dadurch gekennzeichnet, dass** der Reibbelag aus 10 - 40 Gew.-% Harz, 5 -20 Gew.-% Kautschuk, 0,5 - 3 Gew.-% Vulkanisationszusätzen, 8 - 20 Gew.-% Glas, 10 - 30 Gew.-% Schwerspat, 5 - 15 Gew.-% Ruß, 0 - 10 Gew.-% Koks, 0 - 5 Gew.-% Graphit und 5 - 15 Gew.-% Metall besteht, wobei das Glas aus Glasfasern und/oder Glasmehl und 2 - 15 Gew.-% Glashohlkugeln besteht.

## Claims

1. Friction lining, in particular a clutch friction lining, which comprises at least one layer containing at least hollow glass spheres, **characterized in that** the hollow glass spheres consist of borosilicate glass, wherein the hollow glass spheres consist of 50% by weight or more SiO₂, less than 20% by weight Al₂O₃, in each case less than 5% by weight Fe₂O₃, TiO₂, K₂O and CaO, 2 to 20% by weight B₂O₃ and 20 to 40% by weight Na₂O, preferably of 60 to 70% by weight SiO₂, less than 5% by weight Al₂O₃, in each case less than 1% by weight Fe₂O₃, TiO₂, K₂O and CaO, 2 to 10% by weight B₂O₃ and 20 to 35% by weight Na₂O,
wherein the hollow glass spheres have a Mohs hardness of less than 5, preferably 3 to 4 and wherein the hollow glass spheres have a density of 0.6 to 0.8 g/cm³, preferably 0.7 g/cm³, wherein
the hollow glass spheres account for an amount by weight of 2 to 15% of the weight of the friction lining wherein
the hollow glass spheres have a diameter of less than 300 micrometers wherein
the wall thickness of the hollow glass spheres is between 5 and 50%, preferably 10% of the sphere radius and wherein
the hollow glass spheres have an isostatic pressure stability of more than 10 MPa.

2. Friction lining according to Claim 1, **characterized in that** the hollow glass spheres have a melting point of between 500°C and 700°C, preferably 600°C.

3. Friction lining according to Claim 1, **characterized in that** at least one friction lining carrier means is embedded in the friction lining.

4. Friction lining according to Claim 1, **characterized in that** the friction lining is firmly bonded to at least one friction lining carrier means.

5. Friction lining according to Claim 1, **characterized in that** the friction lining consists of 10-40% by weight resin, 5-20% by weight rubber, 0.5-3% by weight vulcanization additives, 8-20% by weight glass, 10-30% by weight baryte, 5-15% by weight carbon black, 0-10% by weight coke, 0-5% by weight graphite and 5-15% by weight metal, where the glass consists of glass fibers and/or ground glass and 2-15% by weight hollow glass spheres.

## Revendications

1. Garniture de frottement, en particulier, garniture de frottement d'embrayage, constituée d'au moins une couche, dans laquelle sont contenues au moins des billes de verre creuses, **caractérisée en ce que** les billes de verre creuses se composent de verre de borosilicate, les billes de verre creuses se composant de 50 % en poids ou plus de SiO₂, de moins de 20 % en poids de Al₂O₃, à chaque fois de moins de 5% en poids de Fe₂O₃, de TiO₂, de K₂O et de CaO, de 2 à 20 % en poids de B₂O₃ et de 20 à 40 % en poids de Na₂O, de préférence de 60 à 70 % en poids de SiO₂, de moins de 5 % en poids de Al₂O₃, à chaque fois de moins de 1 % en poids de Fe₂O₃, de TiO₂, de K₂O et de CaO, de 2 à 10 % en poids de B₂O₃ et de 20 à 35 % en poids de Na₂O, les billes de verre creuses présentant une dureté Mohs de moins de 5, de préférence de 3 à 4, et les billes de verre creuses présentant une densité de 0,6 à 0,8 g/cm³, de préférence de 0,7 g/cm³,
les billes de verre creuses représentant une proportion en poids de 2 à 15 % du poids de la garniture de frottement,
les billes de verre creuses présentant un diamètre inférieur à 300 micromètres,
les billes de verre creuses présentant une épaisseur de paroi comprise entre 5 et 50 %, de préférence de 10 % du rayon des billes, et
les billes de verre creuses présentant une stabilité à la pression isostatique de plus de 10 Mégapascal.

2. Garniture de frottement selon la revendication 1, **caractérisée en ce que** les billes de verre creuses présentent un point de fusion compris entre 500°C et 700°C, de préférence de 600°C.

3. Garniture de frottement selon la revendication 1, **caractérisée en ce qu'**au moins un moyen de support de garniture de frottement est noyé dans la garniture de frottement.

4. Garniture de frottement selon la revendication 1, **caractérisée en ce que** la garniture de frottement est connectée fixement à au moins un moyen de support de garniture de frottement.

5. Garniture de frottement selon la revendication 1, **caractérisée en ce que** la garniture de frottement se compose de 10 - 40 % en poids de résine, de 5 - 20 % en poids de caoutchouc, de 0,5 - 3 % en poids d'additifs de vulcanisation, de 8 - 20 % en poids de verre, de 10 - 30 % en poids de barytine, de 5 - 15 % en poids de suie, de 0 - 10 % en poids de coke, de 0 - 5 % en poids de graphite et de 5 - 15 % en poids de métal, le verre se composant de fibres de verre et/ou de farine de verre et de 2 - 15 % en poids de billes de verre creuses.
